# EUROPEAN PATENT APPLICATION

(11) **EP 4 825 725 A1**
(43) Date of publication of application: **21.10.2026**
(21) Application number: 26170383.9
(22) Date of filing: 02.04.2026
(51) Int. Cl.: B64C 3/18

(54) **RIB FOR AN AIRCRAFT AERODYNAMIC STRUCTURE**

(30) Priority: 16.04.2025 GB 202505747
(71) Applicant: Airbus Operations Ltd, Filton, Bristol BS34 7PA (GB)
(72) Inventor: EGGELTON, Matthew, Bristol (GB); WALEGA, Janusz, Bristol (GB); MUMFORD, John, Bristol (GB); JONES, Tim, Bristol (GB); CHER, Tian Ying Gawin, Bristol (GB); MARTINDALE, Jack, Bristol (GB); KIRBY, Matthew, Bristol (GB); BAIG SALEEM, Muhammad Hassan, Bristol (GB)
(74) Representative: Farrow, James Anthony

(57) **Abstract**

Disclosed is a rib for an aircraft aerodynamic structure. The rib comprises a monolithic frame (30) that forms at least a majority of a perimeter of a space, and comprises first and second frame connectors. The space is between the first and second frame connectors. The rib comprises a replaceable strut (121, 122, 123, 124, 125, 126) having first (401, 403, 406, 408, 409, 412) and second (402, 404, 405, 407, 410, 411) ends that are releasably connected to the first and second frame connectors, respectively, so that the replaceable strut extends across the space.

## Description

### TECHNICAL FIELD

The present invention relates to ribs for aircraft aerodynamic structures, kits of parts for ribs for aircraft aerodynamic structures, aircraft aerodynamic structures comprising such ribs, and aircraft comprising such aircraft aerodynamic structures.

### BACKGROUND

Aircraft wing ribs are elongate structural components of a wing. Wing ribs are generally spaced apart spanwise along a wing, forming a framework that supports and defines the aerodynamic shape of the wing. Wing ribs typically work in conjunction with spars and stringers to distribute aerodynamic and structural loads within the wing.

Conventional wing ribs are typically formed as solid or semi-hollow structures with a series of cutouts or lightening holes to reduce weight while preserving strength. Aircraft wing ribs are often fabricated from aluminum sheets through machining or stamping.

### SUMMARY

A first aspect of the present invention provides a rib for an aircraft aerodynamic structure. The rib comprises a monolithic frame that forms at least a majority of a perimeter of a space, and that comprises first and second frame connectors. The space is between the first and second frame connectors. The rib comprises a replaceable strut having first and second ends that are releasably connected to the first and second frame connectors, respectively, so that the replaceable strut extends across the space.

By providing the replaceable strut, improved access to components installed in or on the aircraft aerodynamic structure, such as fuel, power or communication lines, may be provided via the space when the replaceable strut is not connected to the first and second frame connectors. For instance, during manufacture or maintenance of the aircraft aerodynamic structure, the replaceable strut may be disconnected and removed from the monolithic frame (or may not be connected to the monolithic frame in the first place) to permit personnel and/or tooling to pass through the space with greater ease. The replaceable strut may then be connected (or re-connected) to the first and second frame connectors, so that the strut provides structural support to the monolithic frame. This may improve an ease of access to the aircraft aerodynamic structure, and/or to components installed therein or thereon, compared to a rib comprising an irreplaceable strut permanently connected to the monolithic frame and extending across the space. Moreover, by providing the monolithic frame, a shape of the rib may be maintained when the removable struts are removed.

The monolithic frame may be constructed so that the space is of a large enough size to permit personnel to pass therethrough. In this way, personnel may access otherwise difficult or impossible to reach areas in the aircraft aerodynamic structure, such as for manufacture or maintenance of the aircraft and/or the aircraft aerodynamic structure.

Providing the monolithic frame that defines the majority of the perimeter of the space and provides the first and second frame connectors may result in a structurally stronger rib compared to rib or other structure with a discontinuous frame, in which struts are connected to parts of the frame that are either not connected to each other, or are connected to each other with connectors (rather than being monolithic, or integrally formed, with each other).

Optionally, the monolithic frame forms a whole of the perimeter of the space. In other words, the monolithic frame may be continuous around the perimeter of the space. This may improve a strength of the monolithic frame compared to a frame that is discontinuous around the space.

Optionally, the strut extends through the space. Optionally, the aircraft aerodynamic structure is an aircraft wing, such as an aircraft main wing or tail wing.

Optionally, the monolithic frame forms at least a majority of a further perimeter of a further space. Providing the space and the further space may improve a structural rigidity of the rib compared to a rib with a single space of the same size as a combined size of the space and the further space. The monolithic frame may be constructed so that the space and further space are each of a large enough size to permit personnel to pass therethrough. This may provide ease of access to other components installed in or on the aerodynamic structure.

Alternatively, the further space may be smaller than the space, and/or may not be large enough for personnel to pass through. In this way, primary access to the aircraft aerodynamic structure, or components installed therein or thereon, may be via the space when the replaceable strut is removed from the monolithic frame.

Optionally, the monolithic frame forms a whole of the further perimeter of the further space.

Optionally, the monolithic frame comprises further first and second frame connectors, and the further space is between the further first and second frame connectors, wherein the further first and second frame connectors are configured to releasably connect to respective further first and second ends of a further replaceable strut so that, in use, the further replaceable strut extends across the further space.

Providing the further first and second frame connectors permits releasable connection of the further replaceable strut to the monolithic frame, which may permit a strength of the rib to be increased by connecting the second replaceable strut compared to a rib having only the first and second frame connectors.

Optionally, the rib comprises the further replaceable strut having the further first and second ends that are releasably connected to the further first and second frame connectors, respectively, so that the further replaceable strut extends across the further space.

Providing the further replaceable strut extending across the further space may increase a strength of the monolithic frame compared to a frame without the further replaceable strut. The further replaceable strut may, by being removable from the frame, improve an ease of access to the aircraft aerodynamic structure, and/or to components installed therein or thereon, compared to a rib comprising a fixed strut in the further space.

Optionally, the monolithic frame comprises an outer frame portion and an integral strut portion that extends between two regions of the outer frame portion, such that the integral strut portion defines a part of the perimeter of the space.

Providing the integral strut portion, in addition to the replaceable strut (and/or the further replaceable strut, where provided), may improve a rigidity of the rib when the replaceable strut (and/or the further replaceable strut) is not connected to the monolithic frame, compared to a frame absent such an integral strut portion. This may help the rib to retain its shape and support the wing when the replaceable strut is removed.

Optionally, the integral strut portion defines a part of the further perimeter of the further space, where provided.

Optionally, the two regions of the outer frame portion are a pair of regions, and the monolithic frame comprises at least two integral strut portions that each extend between a respective pair of regions of the outer frame portion. Optionally, the at least two integral strut portions define portions of the perimeter of the same space, such as the perimeter of the space or the further perimeter of the further space (where provided). Optionally, one of the integral strut portions defines a portion of a second further space. Optionally, the second further space is absent any replaceable strut.

Optionally, the rib comprises third and fourth frame connectors, wherein the space is between the third and fourth frame connectors, wherein the replaceable strut is a first replaceable strut, and wherein the third and fourth frame connectors are configured to releasably connect to respective third and fourth ends of a second replaceable strut so that, in use, the second replaceable strut extends across the space.

The third and fourth frame connectors permit releasable connection of the second replaceable strut to the monolithic frame, which may permit a strength of the rib to be increased by connecting the second replaceable strut extending across the space between the third and fourth frame connectors, compared to a rib having only the first and second frame connectors between which the space is located.

Optionally, the rib comprises the second replaceable strut having the third and fourth ends that are removably connected to the third and fourth frame connectors, respectively, so that the second strut extends across the space.

Providing the first and second replaceable struts extending across the space may improve a rigidity of the rib compared to a rib comprising just the first replaceable strut in the space. Moreover, providing the first and second replaceable struts may allow the space to be larger for the same rigidity compared to a rib comprising just the first replaceable strut in the space, thereby improving access to the aerodynamic structure when one or both of the first and the second replaceable struts are removed.

Optionally, the rib comprises a plurality of pairs of frame connectors, including a first pair of frame connectors comprising the first and second frame connectors, and one or both of: a second pair of frame connectors comprising the third and fourth frame connectors, where provided; and a further first pair of frame connectors comprising the further first and second frame connectors, where provided.

Optionally, the space is located between each pair of frame connectors. Optionally, the each of the space and the further space is located between one or more of the pairs of frame connectors. Optionally, the space is located between three pairs of frame connectors and the further space is located between three pairs of frame connectors.

Optionally, each pair of frame connectors is configured to releasably connect to opposing ends of a respective replaceable strut of a plurality of replaceable struts, the plurality of replaceable struts including the first replaceable strut, and, where provided, one or both of: the second replaceable strut, and the further replaceable strut. In this way, in use, each of the replaceable struts in the plurality of replaceable struts extends across the space or the further space. Optionally, the rib comprises the plurality of replaceable struts, including the first replaceable strut and, where provided, one or both of: the second replaceable strut; and the further replaceable strut. Optionally, each replaceable strut comprises respective opposing ends releasably connected to a corresponding pair of the plurality of pairs of frame connectors.

Increasing a number of pairs of frame connectors may permit more replaceable struts to be connected to the rib, which may permit a rigidity of the rib to be improved compared to a rib with only one or two pairs of frame connectors. Moreover, providing the plurality of replaceable struts may allow the space and/or the further space to be larger for the same rigidity compared to a rib comprising just the first replaceable strut and one or both of the second replaceable strut and the further replaceable strut, thereby improving access to the aerodynamic structure when one or more of the replaceable struts is removed.

Optionally, the first and second replaceable struts, or each replaceable strut of the plurality of replaceable struts, extends across the space at an angle to each adjacent replaceable strut. In this way, the replaceable struts may form a "V" shape, a "W" shape or an "M" shape within the space, for example. This may improve a strength of the rib compared to a rib comprising, e.g., parallel replaceable struts.

Optionally, one of the first and second frame connectors comprises a first connector hole, and one of the first and second ends of the replaceable strut comprises a first strut hole. Optionally, the one of the first and second ends is removably connected to the one of the first and second frame connectors by a first pin passing through the first strut hole and the first connector hole

The first pin may be readily removable from, and replaceable in, the first strut hole and the first connector hole, and so may provide a convenient way of removably connecting and disconnecting the one of the first and second ends to the one of the first and second connectors. This may, in turn, provide a replaceable strut that is convenient to remove and replace.

Optionally, the other of the first and second frame connectors comprises a second connector hole, and the other of the first and second ends of the replaceable strut comprises a second strut hole. Optionally, the other of the first and second ends is removably connected to the other of the first and second frame connectors by a second pin passing through the second strut hole and the second connector hole.

The second pin may be readily removable from, and replaceable in, the second strut hole and the second connector hole, and so may provide a convenient way of removably connecting and disconnecting the other of the first and second ends to the other of the first and second frame connectors. This may, in turn, provide a replaceable strut that is convenient to remove and replace.

Optionally, at least one of the opposing ends of any one of the replaceable struts described above, such as the second replaceable strut, the further replaceable strut, or any one of the plurality of replaceable struts, where provided, comprises a corresponding hole that is connected to a corresponding hole of a corresponding frame connector using a corresponding pin.

Optionally, the replaceable strut comprises a rod, and wherein the first and second ends are respective opposite ends of the rod. The rod may provide a rigid structural component for supporting the monolithic frame. Optionally, the rod has a circular cross-sectional shape over at least a majority, such as all, of its length.

Optionally, any one or more of the replaceable struts described above, such as the second replaceable strut, the further replaceable strut, or any one of the plurality of replaceable struts, where provided, comprises a respective rod, wherein the opposing ends of the respective replaceable struts are respective opposite ends of the respective replaceable rods.

Optionally, the replaceable strut comprises two parts extending in parallel between, and together defining, the first and second ends. Optionally, the two parts are discrete parts. Optionally, any one or more of the replaceable struts described above, such as the second replaceable strut, the further replaceable strut, or any one or more of the plurality of replaceable struts, where provided, comprises a respective pair of parallel parts extending in parallel with, and together defining, respective opposing ends of the respective strut.

Optionally, the two parts each have a U-shaped or T-shaped cross section over a majority of a length of the each of the two parts. This may provide parts that are structurally resilient to compressive and tensile stresses, improving a rigidity of the rib.

Optionally, the replaceable strut has an adjustable length so that a distance between the first and second ends is variable.

This may improve a versatility of the replaceable strut compared to a replaceable strut that has a fixed length. Providing an adjustable-length replaceable strut may also facilitate insertion or removal of the strut from the monolithic frame when the replaceable strut is disconnected from the monolithic frame.

A second aspect of the present invention provides a kit for a rib for an aircraft aerodynamic structure. The kit comprises a monolithic frame that forms at least a majority of a perimeter of a space and that comprises first and second frame connectors, wherein the space is between the first and second frame connectors. The first and second frame connectors are configured to releasably connect to respective first and second ends of a replaceable strut so that, in use, the replaceable strut extends across the space.

Optionally, the kit comprises the replaceable strut having the first and second ends that are releasably connectable to the first and second frame connectors, respectively.

It will be appreciated that the kit of the second aspect, or components thereof, may comprise any of the optional features of, and/or benefit from any of the advantages ascribed to, the rib of the first aspect of the present invention, or components thereof.

A third aspect of the present invention provides an aircraft aerodynamic structure comprising the rib of the first aspect of the present invention. Optionally, the aircraft aerodynamic structure is an aircraft wing, such as an aircraft main wing or tail wing.

Optionally, the rib is an inner-most rib of the aerodynamic structure that is configured to be located closest to a longitudinal centreline of a fuselage of the aircraft.

It will be appreciated that the aircraft aerodynamic structure of the third aspect, or components thereof, may comprise any of the optional features of, and/or benefit from any of the advantages ascribed to, the rib of the first aspect or the kit of the second aspect of the present invention.

A fourth aspect of the present invention provides an aircraft comprising the aircraft aerodynamic structure of the third aspect of the present invention. Optionally, the aircraft comprises two aircraft aerodynamic structures, each of the two aircraft aerodynamic structures being according to the third aspect of the present invention.

Optionally, the aircraft aerodynamic structure comprises a first rib and a second rib, each of the first rib and the second rib being according to the first aspect of the present invention. Optionally, when the aircraft comprises two aircraft aerodynamic structures, each aerodynamic structure comprises a respective rib according to the first aspect of the present invention. Optionally, the respective ribs of the two structures are ribs of the two structures that are each closest to a centreline of the aircraft, such as to a longitudinal axis of a fuselage of the aircraft.

It will be appreciated that the aircraft of the fourth aspect of the present invention, or components thereof, may comprise any of the optional features of, and/or benefit from any of the advantages ascribed to, the rib of the first aspect of the present invention, the kit of the second aspect of the present invention, or the aircraft aerodynamic structure of the third aspect of the present invention.

More generally, it will be appreciated that features of any one of the aspects of the present invention may be applied equally to any other one of the aspects of the present invention, where appropriate.

### BRIEF DESCRIPTION OF THE DRAWINGS

Embodiments of the invention will now be described, by way of example only, with reference to the accompanying drawings, in which:
Figure 1 shows a schematic view of an example aircraft;
Figure 2 shows a schematic exploded view of an example wing assembly of a wing of the aircraft of Figure 1;
Figure 3 shows a schematic view of an example rib of the wing assembly of Figure 2 comprising a monolithic frame and replaceable struts;
Figure 4 shows a schematic view of the rib of Figure 3 with the replaceable struts removed;
Figure 5 shows a schematic view of a connection between a replaceable strut and the monolithic frame of the rib of Figures 3 and 4;
Figure 6 shows an alternative example rib comprising the monolithic frame of the rib of Figures 3 and 4, and first and second strut assemblies;
Figure 7 shows an example connection between the first strut assembly and the monolithic frame; and
Figure 8 shows an example connection between the second strut assembly and the monolithic frame.

### DETAILED DESCRIPTION

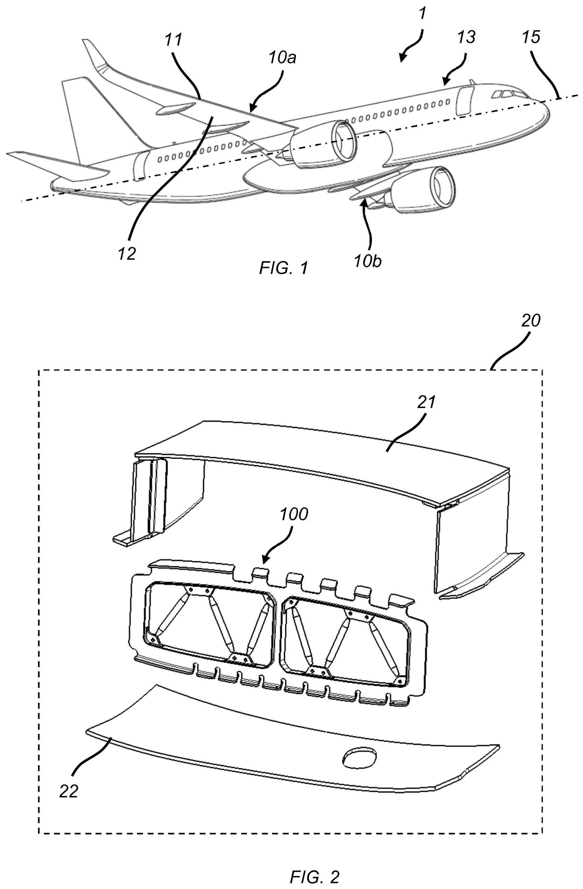

Figure 1 shows an aircraft 1 comprising a fuselage 13 and two aerodynamic structure in the form of a first wing 10a and a second wing 10b, the wings 10a, 10b attached to opposite sides of the fuselage 13. The first wing 10a comprises an upper skin 11, a lower skin 12 and a plurality of ribs (not shown in Figure 1). The ribs are elongate and extend in a direction parallel to a longitudinal axis 15 of the fuselage 13 (i.e., in a direction substantially aligned with a direction of travel of the aircraft 1 during flight). The second wing 10b is substantially the same as the first wing 10a but mirrored on the opposite side of the fuselage 13. It will be appreciated that the second wing 10b comprises substantially the same components as the first wing 10a, and that the below description of components of the first wing 10a similarly apply to components of the second wing 10b.

Figure 2 shows an exploded view of a wing assembly 20 of the first wing 10a. The wing assembly 20 comprises a rib 100, an upper skin section 21 of the upper skin 11, and a lower skin section 22 of the lower skin. The upper and lower skin sections 21, 22 are, in use, attached to the rib 100 so that the rib 100 is located between the upper and lower skin sections 21, 22. The rib 100 is here an inner-most rib of the first wing 10, closest to the longitudinal axis 15 of the aircraft 1, but in other examples may be any other rib of the first wing 10a, or of another wing (such as the second wing 10b), a tail plane, or other aerodynamic structure of the aircraft 1. As noted above, the second wing 10b has a corresponding, mirrored structure to the first wing 10a, and so comprises a further rib corresponding to the rib 100. The further rib of the second wing 10b is similarly the innermost rib to the longitudinal axis 15 of the aircraft 1, but in other examples could be any other rib of the second wing 10b.

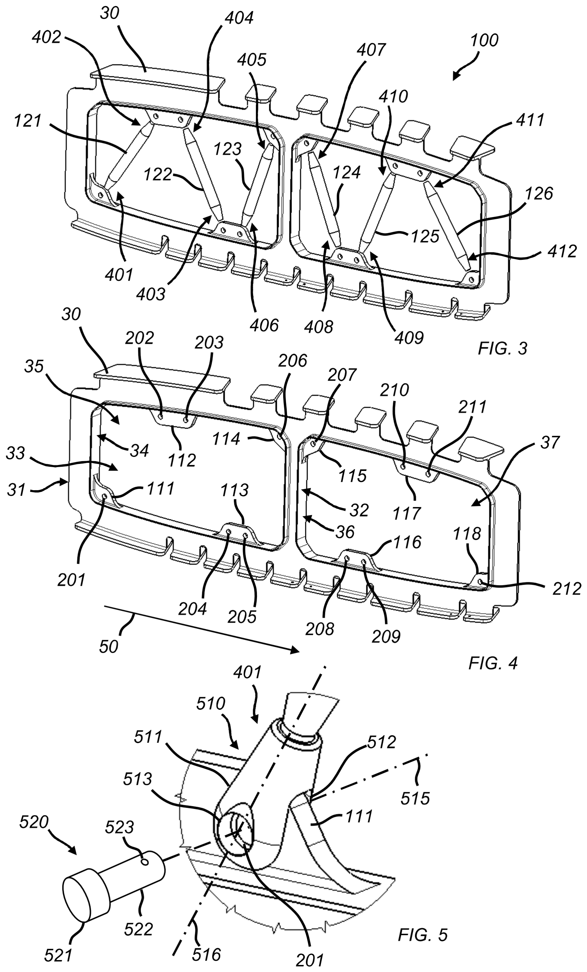

The rib 100 is shown in isolation in Figures 3 and 4. As shown in Figure 3, the rib 100 comprises a monolithic frame 30 and first to sixth rods 121, 122, 123, 124, 125, 126 releasably connected (as described below) to the monolithic frame 30. The first to sixth rods 121, 122, 123, 124, 125, 126 are struts that provide rigidity to the monolithic frame 30. The rib 100 is shown in Figure 4 with the first to sixth rods 121, 122, 123, 124, 125, 126 removed. Here it can be seen that the monolithic frame 30 comprises an outer frame 31, an integral strut 32, and first to eighth lugs 111, 112, 113, 114, 115, 116, 117, 118.

The outer frame 31 is substantially elongate in a frame direction 50 which, when the rib 100 is installed on the aircraft 1, is substantially parallel to the longitudinal axis 15 of the fuselage 13 of the aircraft 1. In particular, the outer frame 31 is substantially rectangular, and defines a substantially rectangular central area 33. The integral strut 32 extends between two regions of the outer structure 31 such that the integral strut 32 bifurcates the central area 33. Thereby, the outer structure 31 and the integral strut 32 together define a first perimeter 34 of a first space 35, which is substantially rectangular, and a second perimeter 36 of a second space 37, which is also substantially rectangular. In the present example, the integral strut 32 extends between two sides of the outer structure 31, and is substantially perpendicular to each of the two sides of the outer structure 31. In other examples, the integral strut 32 may be at an angle to one or both of the two sides of the outer structure 31. This may provide an alternative distribution of loads in the monolithic frame 30, such as with each of the first to sixth rods 121, 122, 123, 124, 125, 126 connected to the monolithic frame 30, and/or with one or more of the first to sixth rods 121, 122, 123, 124, 125, 126 removed from the monolithic frame 30. When the integral strut 32 is at an angle to one or both of the two sides of the outer structure, the integral strut 32 may bifurcate the first and second spaces 35, 37 such that each of the first and second spaces 35, 37 has a substantially trapezoidal shape. It will be appreciated that the first and second spaces 35, 37 may be of any other suitable shape in other examples.

The monolithic frame 30 is monolithic in that all parts of the monolithic frame 30 are unitary with each other and formed from the same unitary piece of material, which in this case is an aluminium billet. In particular, the outer frame 31 and integral strut 32 are provided by removing, by machining, material from the aluminium billet to form the first and second spaces 35, 37. There are no interfaces between parts of the monolithic frame 30. In particular, the outer frame 31 and the integral strut 36 are integral with each other. It will be appreciated that, in other examples, the monolithic frame 30 is formed from any other suitable material, such as another metal, or a composite material, and/or may be formed by a process other than machining, such as by casting or additive manufacturing.

The first to fourth lugs 111, 112, 113, 114 are located on the part of the monolithic frame 30 that defines the first space 35, and each protrudes into the first space 35. The fifth to eighth lugs 115, 116, 117, 118 are located on a part of the monolithic frame 30 that defines the second space 37, and each protrudes into the second space 37. The first, third, sixth, and eighth lugs 111, 113, 116, 118 are each located on an opposite side of the outer frame 31 to each of the second, fourth, fifth, and seventh lugs 112, 114, 115, 117. In particular, the first, third, sixth and eighth lugs 111, 113, 116, 118 are located on a side of the outer frame 31 that is connected, in use, to the lower skin support 22. The second, fourth, fifth, and seventh 112, 114, 115, 117 lugs are located on a side of the outer frame 31 that is connected, in use, to the upper skin support 21. The first to eighth lugs 111, 112, 113, 114, 115, 116, 117, 118 are staggered along the outer frame 31 in the frame direction 50, so that the first to eighth lugs 111, 112, 113, 114, 115, 116, 117, 118 are spaced in the frame direction. The first and fourth lugs 111, 114 are located in opposing corners of the first perimeter 34 of the first space 35, and the second and third lugs 112, 113 are located on opposing sides of the first perimeter 34 of the first space 35. The fifth and eighth 115, 118 lugs are here located in opposing corners of the second perimeter 36 of the second space 37, and the sixth and seventh lugs 116, 117 are located on opposing sides of the second perimeter 36 of the second space 37. The first, fourth, fifth and eighth lugs 111, 114, 115, 118 are substantially triangular in shape, and the second, third, sixth and seventh lugs 112, 113, 116, 117 are substantially trapezoidal in shape.

The first lug 111 defines a first lug hole 201. The second lug 112 defines second and third lug holes 202, 203. The third lug 113 defines fourth and fifth lug holes 204, 205. The fourth lug 114 defines a sixth lug hole 206. The fifth lug 115 defines a seventh lug hole 207. The sixth lug 116 defines eight and ninth lug holes 208, 209. The seventh lug 117 defines tenth and eleventh lug holes 210, 211. The eighth lug 118 defines a twelfth lug hole 212.

The first rod 121 comprises first and second opposing ends 401, 402, which are connected to the first and second lug holes 201, 202, respectively. The second rod 122 comprises third and fourth opposing ends 403, 404, which are connected to the third and fourth lug holes 203, 204, respectively. The third rod 123 comprises fifth and sixth opposing ends 405, 406, which are connected to the fifth and sixth lug holes 205, 206, respectively. The fourth rod 124 comprises seventh and eighth opposing ends 407, 408 which are connected to the seventh and eighth lug holes 207, 208, respectively. The fifth rod 125 comprises ninth and tenth opposing ends 409, 410 which are connected to the ninth and tenth lug holes 209, 210 respectively. The sixth rod 126 comprises eleventh and twelfth opposing ends 411, 412, which are connected to the eleventh and twelfth lug holes 211, 212 respectively. In this way, the first to third rods 121, 122, 123each extend through the first space 35 between opposing sides of the outer frame 31, and the fourth to sixth rods 124, 125, 126 each extend through the second space 37 between opposing sides of the outer frame 31. Due to the staggering of the first to eighth lugs 111, 112, 113, 114, 115, 116, 117, 118 in the frame direction 50, adjacent ones of the first to sixth rods 121, 122, 123, 124, 125, 126 form a "V" shape, and no two immediately adjacent ones are parallel to each other.

As will be described in more detail below, each of the first to sixth rods 121, 122, 123, 124, 125, 126 is independently removable from the monolithic frame 30. Figure 4, as noted above, shows the monolithic frame 30 with the first to sixth rods 121, 122, 123, 124, 125, 126 removed. In this configuration, the first and second spaces 35, 37 are unobstructed by the first to sixth rods 121, 122, 123, 124, 125, 126, making it easier for personnel and/or tooling to pass through the first and/or the second space 35, 37, such as during manufacture and/or maintenance of the wing assembly 20, the wing(s) 10a, 10b, or the aircraft 13. In other examples, one or more of the first to sixth rods 121, 122, 123, 124, 125, 126 may be present in the monolithic frame 30, such as during manufacture or maintenance. In some examples, only some of the first to sixth rods 121, 122, 123, 124, 125, 126 may be present in the monolithic frame during manufacture or maintenance. All of the first to sixth rods 121, 122, 123, 124, 125, 126 are in place when the aircraft is in normal service, such as when flying or taxiing.

Figure 5 shows a close-up exploded view of a connection between the first lug 111 and the first end 401 of the first rod 121. Note that this connection is not shown in Figures 2 and 3, for visual clarity. The first end 401 defines a clevis 510, which is a U-shaped piece having first and second prongs 511, 512, each prong 511, 512 having a respective clevis hole 513 (only the clevis hole 513 of the first prong 511 can be seen in Figure 5). The clevis holes (collectively referred to with the reference 513) are concentric with each other along a clevis axis 515 perpendicular to a rod longitudinal axis 516 of the first rod 121.

The first lug 111 is located between the first and second prongs 511, 512 such that the first lug hole 201 is concentric with the clevis axis 515. A clevis pin 520 is provided. The clevis pin 520 is shown external to the clevis 510 in Figure 5, for visual clarity. The clevis pin 520 comprises a head 521, a shank 522 extending away from the head 521 and aligned with the clevis axis 515, and a cross-hole 523 extending fully through the shank 522 in a direction perpendicular to the clevis axis 515. To connect the clevis 510 to the first lug 111, the clevis pin 520 is inserted along the clevis axis 515 through the clevis holes 513 and the first lug hole 201 so that the head 520 abuts the first prong 511 of the clevis 510, and the cross-hole 523 is located outside of the clevis holes 513 and the first lug hole 201. A split pin (not shown) is inserted through the cross-hole 523 and abuts the second prong 512. The head 521 and the split pin retain the clevis pin 520 in position along the clevis axis 515 relative to the clevis 510. In this way, the clevis pin 520 connects the clevis 510 of the first rod 121 to the first lug 111. The split pin can be removed to allow removal of the clevis pin 520. Removing the clevis pin 520 disconnects the clevis 510 from the first lug 111. It will be appreciated that the clevis pin 520 may be replaced through the clevis holes 513 and first lug hole 401 to once again connect the clevis 510 to the first lug 111, or to connect a corresponding clevis of another rod (e.g., a replacement first rod) to the first lug 111.

In a similar way, the second end 402 of the first rod 122 comprises a corresponding clevis (not shown here) that is removably connected, using a corresponding clevis pin, to the second lug 112. In this way, the first rod 121 is removably connected to the monolithic frame 30. In particular, the first rod 121 can be connected to, and removed from, the monolithic frame 30 by respectively connecting and disconnecting the first end 401 to the first lug 111 using the clevis 510 and clevis pin 520, and by respectively connecting and disconnecting the second end 402 to the second lug 112 using a corresponding clevis and clevis pin. This allows the first rod 121 to be repeatedly connected to, and disconnected from, the monolithic frame 30.

In a similar way, whilst not shown in the Figures, each of the third to twelfth ends 403, 404, 405, 406, 407, 408, 409, 410, 411, 412 of the second to sixth rods 122, 123, 124, 125, 126 comprises a corresponding clevis, which is removably connected to one of the third to eighth lugs 113, 114, 115, 116, 117, 118 using a corresponding clevis pin inserted through a respective one of the third to twelfth lug holes 203, 204, 205, 206, 207, 208, 209, 210, 211, 212. In this way, each of the first to sixth rods 121, 122, 123, 124, 125, 126 is removably connected to the monolithic frame 31, and forms a respective removable (and replaceable) strut of the rib 100, in contrast to the integral strut 32, which as noted above is an integral part of the monolithic frame 30.

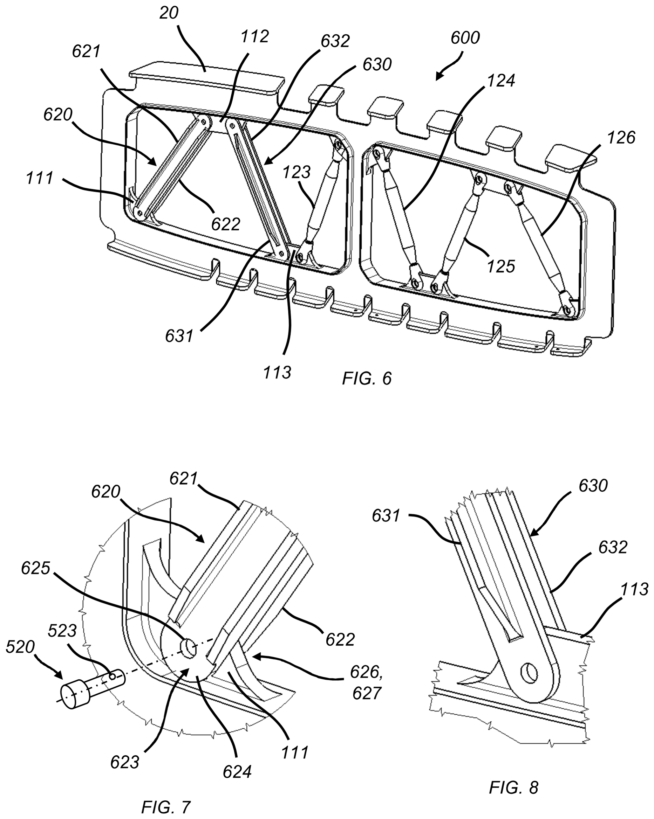

Figure 6 shows an alternative rib 600, wherein like components of the alternative rib 600 and the rib 100 described above are given like reference numerals. In the alternative rib 600, the first rod 121 has been replaced with a first parallel strut arrangement 620, and the second rod 122 has been replaced with a second parallel strut arrangement 630.

The first parallel strut arrangement 620 is of a first form which, as best shown in the close-up view of Figure 7, comprises first and second parallel U-shaped beams 621, 622. The first and second U-shaped beams each have a U-shaped cross-sectional area along a majority of a length of each of the first and second U-shaped beam 621, 622. The first U-shaped beam 621 has a first beam end 623 comprising a first beam lug 624. The first beam lug 624 defines a first beam lug hole 625 which is concentric with the first lug hole 201 of the first lug 111. The second U-shaped beam 622 comprises a second beam end 626 comprising a second beam lug 627 similar to the first beam lug 624. Whilst not visible in Figure 6, the second beam lug 627 defines a second beam lug hole which is concentric with the first lug hole 201 and the first beam lug hole 625. The first lug 111 is located between the first beam lug 624 and the second beam lug 627. As with the clevis 510 of the first rod 121 discussed above, to secure the first beam lug 624 and the second beam lug 627 to the first lug 111, the clevis pin 520 is inserted through the first beam lug hole 625, the first lug hole 201, and the second beam lug hole. The pin extends through each of the lug holes to such an extent that the head 521 of the clevis pin 520 abuts the first beam lug 624 and the cross-hole 523 of the clevis pin 520 is located outside of each of the lug holes. The split pin (not shown) is inserted through the cross-hole 523. In this way, the head 521 and split pin restrict relative movement of the pin through the first beam lug hole 625, the second beam lug hole and the first lug hole 201, to secure the first and second parallel U-shaped beams 621, 622 to the first lug 111.

Whilst not labelled in the Figures, the first U-shaped beam comprises a third beam end opposite to the first beam end 623, and the second U-shaped beam comprises a fourth beam end, opposite to the second beam end 626. The third and fourth beam ends similarly comprise respective third and fourth beam lugs, defining respective third and fourth beam lug holes. The third and fourth beam lugs are located at either side of the second lug 112, so that the third and fourth beam lug holes are concentric with each other and with the second lug hole 202. A clevis pin similar to the clevis pin 520 is provided through the third and fourth beam lug holes and the second lug hole 202 to removably connect the third and fourth beam lugs to the second lug 112. By removably connecting the first beam lug 623 and the second beam lug 627 to the first lug 111, and removably connecting the third beam lug and the fourth beam lug to the second lug 112, the first and second U-shaped beams are removably connected to the monolithic frame 30, and run parallel to each other through the first space 35 between the first and second lugs 111, 112.

The second parallel strut arrangement 630 is of a second form which, as best shown in the close-up view of Figure 8, comprises first and second parallel T-shaped beams 631, 632. The first and second T-shaped beams 631, 632 are the same as the first and second U-shaped beams except that a cross-section of the T-shaped beams is substantially T-shaped along a majority of a length of each of the T-shaped beams. Otherwise, whilst not labelled in the Figures for visual clarity, the first and second T-shaped beams each comprise respective opposing beam ends, each beam end comprising a respective beam lug. One beam lug of each of the first and second parallel T-shaped beams is connected to the third lug hole 203 of the second lug 112 using a corresponding clevis pin, as described above for the first and second parallel U-shaped beams 621, 622. The other beam lug of each of the first and second parallel T-shaped beams 631, 632 is connected to the fourth lug hole 204 of the third lug 113 using a corresponding clevis pin, as described above for the first and second parallel U-shaped beams 621, 622. In this way, the first and second T-shaped beams are removably connected to the monolithic frame 30, and run parallel to each other through the first space 35 between the second and third lugs 112, 113.

Alternatives and modifications to the above-described examples, within the scope of the appended claims, will be evident to the skilled person. For instance, whilst the examples described above utilise a clevis pin 520 to removably connect the first to sixth rods 121, 122, 123, 124, 125, 126, and/or the first and/or second parallel strut arrangements 620, 630, to the monolithic frame 30, any other suitable removable connection may be used in other examples. For instance, any one or more of the first to sixth rods 121, 122, 123, 124, 125, 126, and/or the first and/or the second parallel strut arrangements 620, 630, may be bolted to the first to eighth lugs 111, 112, 113, 114, 115, 116, 117, 118. In such bolted arrangements, a castellated nut may be tightened onto a bolt as a primary locking mechanism. A split pin or wire locking may additionally be provided as a secondary locking mechanism, to reduce a likelihood of the castellated nut loosening over time. In other examples, eccentric pins and/or bush arrangements may be used to provide precise alignment of the struts. Other types of removable connection will be apparent to the skilled person.

In other examples, any one or more of the first to sixth rods 121, 122, 123, 124, 125, 126, may be replaced with respective replaceable struts of an alternate form, such as in the form of the first and/or the second parallel strut arrangements 620, 630, or other alternative struts or strut arrangements. In various examples, there may be any number of replaceable struts removably connected to the monolithic frame 30 and passing through the first space 35 or through the second space 37. Such replaceable struts may be of any suitable form, such as, but not limited to, in the form of rods, or in the form of U- or T-shaped parallel beams, as described above.

In the examples described above, particularly with reference to Figure 5, the first end 401 of the first rod 121 defines the clevis 510, which connects to the first lug 111 on the monolithic frame 30. In other examples, instead of the first lug 111, the monolithic frame 30 may instead comprise a U-shaped clevis, and the first end 401 of the first rod 121 may define a lug that slots into the U-shaped clevis on the monolithic frame 30. This may be the case for the or each opposing end of any or all of the first to sixth rods 121, 122, 123, 124, 125, 126.

In examples such as those shown and described above, the first to sixth rods 121, 122, 123, 124, 125, 126 are each of the same length, and so are interchangeable with one another. In other examples, one or more of the rods has a different length to one or more others of the rods, or each rod has a different length to each other rod. Providing rods of different lengths may provide different loads through different portions of the monolithic frame 30. This may, for example, allow the rib 100 to be stiffer towards a trailing edge of the first wing 10a or the second wing 10b, which may experience greater loads during flight of the aircraft 1. Other dimensions may be varied, such as diameters of any of the first to sixth rods 121, 122, 123, 124, 125, 126, diameters of any of the first to eighth lug holes 201, 202, 203, 204, 205, 206, 207, 208, diameters of the first and second clevis holes 513 (or holes of the clevis of any other rod), and/or diameters of the clevis pin 520 (or other clevis pins for other ends of the rod or other rods). Any suitable dimensions of the U-shaped beams described above with reference to Figure 7 and/or Figure 8 may similarly be varied. In some examples, a length of one or more of the replaceable struts is variable. This may be achieved in any suitable way, such as by a respective one or more of the rods being formed of two parts which are connected together by a screw thread connection, or connected together by a pin passing through one of a series of holes in each part, for example.

In the examples described above, the first and second spaces 35, 37 have substantially the same cross-sectional area. In other examples, one of the first and second spaces 35, 37 may be bigger than the other of the first and second spaces 35, 37. In some examples, replaceable struts (such one or more of the first to sixth rods 121, 122, 123, 124, 125, 126) pass through only one of the first and second spaces 35, 37. For instance, in some examples, the integral strut 32 may separate the first space 35, comprising replaceable struts, from a second space 37 (which may be smaller than the first space), absent replaceable struts. In some examples, more than two spaces may be provided, such as by one or more further integral struts. Any one or more of the spaces in the monolithic frame 30 may comprise replaceable struts. On other examples only one space, such as the first space 35, is provided. In such examples, the monolithic frame 30 may define a solid region adjacent to the first space 35, i.e., where the second space 37 in the examples described above would be. In such an example, an operator may still be able to readily access components in the first or second wings 10a, 10b via the first space 35 (by removing one or more replaceable struts), but not via the solid region where the second space 37 would be. In some examples, the solid region may comprise one or more apertures therethrough, to reduce a weight of the monolithic frame 30. In such examples, each aperture may be smaller than the first space 35.

It will be appreciated that the orientation of the first to sixth rods 121, 122, 123, 124, 125, 126 (and/or the U-shaped or I-shaped parallel beams 620, 630) is dictated by the location of the first to eighth lugs 111, 112, 113, 114, 115, 116, 117, 118. In some examples, there may be more than eight, or fewer than eight, lugs 111, 112, 113, 114, 115, 116, 117, 118. For instance, the second lug 112 may be split into two separate lugs, each lug comprising a respective one of the second and third lug holes 202, 203. In some examples, the number of lugs depends on the number of replaceable struts. The lugs, however many there are, may be arranged to provide any suitable orientation of the replaceable struts. For instance, whilst adjacent replaceable struts in the example described above form a "V" shape (specifically the first to sixth rods 121, 122, 123, 124, 125, 126 together form a repeating "M" or "W" shape), in some examples, one or more pairs of adjacent struts may be parallel, or may be arranged so that the replaceable struts form any other suitable pattern in the first and/or second spaces 35, 37 (or further spaces), such as a fan shape. It will be appreciated that the any one or more of the shape, dimensions (e.g., length, width and/or diameter), number, and orientation of replaceable struts may be varied in various examples. This may provide flexibility in the design of the rib 100, 600. For instance, the shape, dimensions, number and orientation of replaceable struts may be dependent on the load expected to be passed through the rib 100, 600 for a particular aircraft 1 or flight.

Similarly, whilst a specific shape and location of the first to eighth lugs 111, 112, 113, 114, 115, 116, 117, 118 has been shown and described above, it will be appreciated that the particular size, shape, and/or location of each of the first to eighth lugs 111, 112, 113, 114, 115, 116, 117, 118 may be different in different examples. For instance, the size, shape, and/or location of each of the first to eighth lugs 111, 112, 113, 114, 115, 116, 117, 118 may be tailored to provide a desired distribution of loads in the rib 100. By way of example only, each of the first, fourth, fifth and eighth lugs 111, 114, 115, 118, which are described above as being located in respective corners of the first space or the second space 35, 37, may be larger than each of the second, third, sixth and seventh lugs 112, 113, 116, 117, which may better distribute loads into corners of the monolithic frame 30. Other relative sizes, shapes and arrangement of the first to eighth lugs 111, 112, 113, 114, 115, 116, 117, 118 (or any other suitable number of lugs) will be evident to the skilled person.

It is to be noted that the term "or" as used herein is to be interpreted to mean "and/or", unless expressly stated otherwise.

## Claims

1. A rib for an aircraft aerodynamic structure, the rib comprising:
a monolithic frame that forms at least a majority of a perimeter of a space and that comprises first and second frame connectors, wherein the space is between the first and second frame connectors; and
a replaceable strut having first and second ends that are releasably connected to the first and second frame connectors, respectively, so that the replaceable strut extends across the space.

2. The rib of claim 1, wherein the monolithic frame forms at least a majority of a further perimeter of a further space.

3. The rib of claim 2, wherein the monolithic frame comprises further first and second frame connectors, and the further space is between the further first and second frame connectors, wherein the further first and second frame connectors are configured to releasably connect to respective further first and second ends of a further replaceable strut so that, in use, the further replaceable strut extends across the further space.

4. The rib of claim 3, comprising the further replaceable strut having the further first and second ends that are releasably connected to the further first and second frame connectors, respectively, so that the further replaceable strut extends across the further space.

5. The rib of any one of claims 1 to 4, wherein the monolithic frame comprises an outer frame portion and an integral strut portion that extends between two regions of the outer frame portion, such that the integral strut portion defines a part of the perimeter of the space.

6. The rib of any one of claims 1 to 5, comprising third and fourth frame connectors, wherein the space is between the third and fourth frame connectors, wherein the replaceable strut is a first replaceable strut, and wherein the third and fourth frame connectors are configured to releasably connect to respective third and fourth ends of a second replaceable strut so that, in use, the second replaceable strut extends across the space.

7. The rib of claim 6, comprising the second replaceable strut having the third and fourth ends that are removably connected to the third and fourth frame connectors, respectively, so that the second strut extends across the space.

8. The rib of any one of claims 1 to 7, wherein one of the first and second frame connectors comprises a first connector hole, and one of the first and second ends of the replaceable strut comprises a first strut hole; and
wherein the one of the first and second ends is removably connected to the one of the first and second frame connectors by a first pin passing through the first strut hole and the first connector hole

9. The rib of claim 8, wherein the other of the first and second frame connectors comprises a second connector hole, and the other of the first and second ends of the replaceable strut comprises a second strut hole; and
wherein the other of the first and second ends is removably connected to the other of the first and second frame connectors by a second pin passing through the second strut hole and the second connector hole.

10. The rib of any one of claims 1 to 9, wherein the replaceable strut comprises a rod, and wherein the first and second ends are respective opposite ends of the rod.

11. The rib of any one of claims 1 to 9, wherein the replaceable strut comprises two parts extending in parallel between, and together defining, the first and second ends.

12. The rib of any one of claims 1 to 11, wherein the replaceable strut has an adjustable length so that a distance between the first and second ends is variable.

13. A kit for a rib for an aircraft aerodynamic structure, the kit comprising a monolithic frame that forms at least a majority of a perimeter of a space and that comprises first and second frame connectors, wherein the space is between the first and second frame connectors, and
wherein the first and second frame connectors are configured to releasably connect to respective first and second ends of a replaceable strut so that, in use, the replaceable strut extends across the space.

14. The kit of claim 13, comprising the replaceable strut having the first and second ends that are releasably connectable to the first and second frame connectors, respectively.

15. An aircraft aerodynamic structure comprising the rib of any one of claims 1 to 12.

16. An aircraft comprising the aircraft aerodynamic structure of claim 15.
